# FASCICULE DE BREVET EUROPEEN

(11) **EP 2 922 431 B1**
(45) Date de publication et mention de la délivrance du brevet: **04.01.2017**
(21) Numéro de dépôt: 13805287.3
(22) Date de dépôt: 19.11.2013
(51) Int. Cl.: A41D 31/00, A41D 13/015

(54) **PANNEAU MODULAIRE SOUPLE D'ABSORPTION ET BLOC POUR LA FABRICATION D'UN TEL PANNEAU**
MODULARE FLEXIBLE ABSORPTIONSPLATTE UND BLOCK ZUR HERSTELLUNG EINER DERARTIGEN PLATTE
FLEXIBLE MODULAR ABSORPTION PANEL AND BLOCK FOR PRODUCING SUCH A PANEL

(30) Priorité: 23.11.2012 FR 1261151
(43) Date de publication de la demande: 30.09.2015
(73) Titulaire: Holdiprotec, 75008 Paris (FR)
(72) Inventeur: DESNOYERS, Stéphane, F-75008 Paris (FR)
(74) Mandataire: Gevers & Orès
(86) Numéro de dépôt international: PCT/EP2013/074164
(87) Numéro de publication internationale: WO 2014/079839

(56) Documents cités:
- US-A- 4 483 020
- US-A1- 2011 296 594
- US-A1- 2012 198 594

## Description

### DOMAINE TECHNIQUE DE L'INVENTION

L'invention concerne un panneau modulaire souple d'absorption des chocs et/ou des vibrations, ainsi qu'un bloc individuel pour la fabrication d'un tel panneau modulaire souple.

L'invention concerne plus particulièrement un panneau modulaire souple du type qui est délimité par une face supérieure horizontale, dite d'impact, apte à recevoir un impact ou une onde vibratoire à absorber, et par une surface inférieure opposée parallèle à la face supérieure.

Une telle structure souple, de faible épaisseur entre ses deux faces opposées, permet notamment la fabrication de différentes protections du corps humain.

De telles protections sont par exemple utilisées pour la pratique de différentes activités humaines et par exemple pour la pratique de certaines activités sportives telle que l'équitation, ou pour la pratique du motocyclisme.

Une telle protection doit répondre à différents critères et normes européennes, et répondre aussi à certaines exigences ergonomiques.

La structure doit être la plus souple possible pour s'adapter à différentes formes de différentes parties du corps humain qu'elle doit protéger.

Elle doit être modulaire afin de pouvoir réaliser, par assemblage, des protections de différentes formes et dimensions.

La structure doit être la plus légère possible pour une capacité déterminée d'absorption des chocs et/ou des vibrations.

La protection doit de plus permettre une circulation d'air la plus grande possible à travers le panneau de protection afin que son utilisateur dispose du plus grand confort possible d'utilisation, notamment afin d'éviter des phénomènes de transpiration excessive.

### ETAT DE LA TECHNIQUE

Les protections actuellement disponibles sur le marché ne répondent pas à toutes ces exigences, et c'est notamment le cas des panneaux de protections commercialisés par la Société PORON™ dont la mise en oeuvre industrielle nécessite des opérations complexes de découpe, dont le poids est élevé et qui sont des protections "'pleines" ne permettant aucune circulation d'air.

On connaît encore des protection de la marque DAINESE™ qui sont très rigides et encombrantes et qui n'offrent pas de capacités d'adaptation selon les trois dimensions.

US2011296594 divulgue un système connu pour absorber des forces d'impacte.

### BREF RESUME DE L'INVENTION

L'invention propose un panneau modulaire souple d'absorption des chocs et/ou des vibrations qui est délimité par une surface supérieure horizontale d'impact et une surface inférieure opposée parallèle et qui est réalisé par l'assemblage d'une pluralité de blocs individuels adjacents d'absorption, panneau dans lequel :
- chaque bloc individuel est en forme de tronc de pyramide polyédrique, au moins partiellement creux, dont la base est un polygone régulier à n côtés ;
- chaque bloc individuel est délimité par :
   -- une paroi supérieure horizontale d'impact ;
   -- n parois latérales verticales contiguës reliées entre elles et reliées à ladite paroi supérieure ;
- les n parois latérales contiguës sont entourées par une lèvre inférieure périphérique qui s'étend horizontalement et radialement vers l'extérieur ;
- chaque tronçon de la lèvre inférieure qui s'étend le long d'une paroi latérale est muni d'un tenon ou d'une mortaise complémentaires agencés de manière à permettre l'assemblage de deux blocs individuels adjacents, notamment par emboîtement selon la direction verticale d'un tenon et d'une mortaise appartenant respectivement à l'un et à l'autre desdits deux blocs individuels adjacents.

Selon d'autres caractéristiques du panneau :
- le polygone est un hexagone régulier, et chacun des six tronçons consécutifs de la lèvre inférieure est muni, alternativement, d'un tenon ou d'une mortaise complémentaires ;
- le panneau comporte au moins un sous-ensemble composé de six blocs individuels identiques qui sont agencés en une couronne circulaire régulière délimitée par dix huit parois latérales consécutives appartenant aux blocs individuels, ces parois latérales étant entourées par une lèvre inférieure périphérique qui s'étend horizontalement vers l'extérieur, chacun des dix huit tronçons de la lèvre inférieure périphérique qui s'étend le long d'une paroi latérale étant muni d'un tenon ou d'une mortaise complémentaires agencés de manière à permettre l'assemblage du sous-ensemble avec un bloc individuel adjacent et/ou avec un sous ensemble adjacent ;
- le sous-ensemble comporte un septième bloc individuel identique agencé au centre du sous-ensemble ;
- les blocs individuels du sous-ensemble sont réalisés en une seule pièce, et le sous-ensemble est délimité par dix-huit parois latérales verticales contiguës reliées entre elles et reliées à une paroi supérieure commune, ces dix-huit parois latérales contiguës étant entourées par une lèvre inférieure périphérique continue qui s'étend horizontalement vers l'extérieur ;
- au moins certains desdits blocs individuels et/ou sous-ensembles sont reliés entre eux par une piqûre servant de couture, réalisée à la main ou à l'aide d'une machine à coudre ;
- chaque bloc individuel et/ou chaque sous-ensemble est réalisé par moulage par injection d'une matière thermoplastique ;
- la face inférieure ouverte d'au moins un bloc individuel et/ou d'au moins un sous-ensemble est fermée par un couvercle rapporté ;
- ladite matière thermoplastique est choisie parmi le groupe comportant le polyamide et le polyéthylène ;
- chaque bloc individuel et/ou chaque sous-ensemble comporte au moins une cloison interne qui s'étend verticalement, depuis la face interne de la paroi supérieure, sur toute sa hauteur ;
- chaque bloc individuel et/ou chaque sous-ensemble comporte plusieurs cloisons internes agencées en étoile dont chacune s'étend verticalement, depuis la face interne de la paroi supérieure, sur toute sa hauteur ;
- chaque bloc individuel et/ou chaque sous-ensemble comporte au moins un pied qui s'étend verticalement, depuis la face interne de la paroi supérieure, sur toute sa hauteur.

L'invention propose aussi un bloc individuel pour la fabrication d'un panneau modulaire selon l'invention, caractérisé en ce que :
- le bloc individuel est en forme de tronc de pyramide polyédrique, au moins partiellement creux, dont la base est un polygone régulier à n côtés ;
- le bloc individuel est délimité par :
   -- une paroi supérieure horizontale d'impact ;
   -- n parois latérales verticales contiguës reliées entre elles et reliées à ladite paroi supérieure ;
- les n parois latérales contiguës sont entourées par une lèvre inférieure périphérique qui s'étend horizontalement et radialement vers l'extérieur ;
- chaque tronçon de la lèvre inférieure qui s'étend le long d'une paroi latérale est muni d'un tenon ou d'une mortaise complémentaires agencés de manière à permettre l'assemblage de deux blocs individuels adjacents, notamment par emboîtement selon la direction verticale d'un tenon et d'une mortaise appartenant respectivement à l'un et à l'autre desdits deux blocs individuels adjacents.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective de dessous d'un premier exemple de réalisation d'un bloc individuel selon l'invention ;
- la figure 2 est une vue de dessous du bloc de la figure 1 ;
- la figure 3 est une vue en coupe selon la ligne 3-3 de la figure 2 ;
- les figures 4, 5 et 6 sont des vues analogues à celle de la figure 1 qui illustrent trois variantes de réalisation du bloc individuel représenté à la figure 1 ;
- la figure 7 est une vue schématique de dessous d'un panneau modulaire souple réalisé par assemblage de blocs individuels du type de ceux illustrés aux figures 1 et 4 à 6 ;
- la figure 8 est une vue schématique de dessous d'un morceau d'un panneau modulaire obtenu par assemblage d'une pluralité de blocs individuels du type de celui représenté à la figure 1 ;
- la figure 9 est une vue de dessous de la figure 8 ;
- la figure 10 illustre une variante de l'invention dans laquelle le sous-ensemble en forme de couronne ou de rosace avec son bloc central est réalisé en une seule pièce, ainsi que l'assemblage de plusieurs de ces sous-ensembles avec des blocs individuels ;
- la figure 11 est une vue de détail à plus grande échelle de la figure 10 sur laquelle est aussi illustré un couvercle de fermeture du sous ensemble.

### DESCRIPTION DETAILLEE DES FIGURES

Dans la description qui va suivre, on utilisera à titre d'exemple non limitatif les ternes horizontal, vertical, supérieur, inférieur, etc. sans référence à la gravité terrestre, mais en référence au trièdre L, V, T représenté sur les figures.

Des éléments et composants identiques, analogues ou similaires seront désignés par les mêmes références.

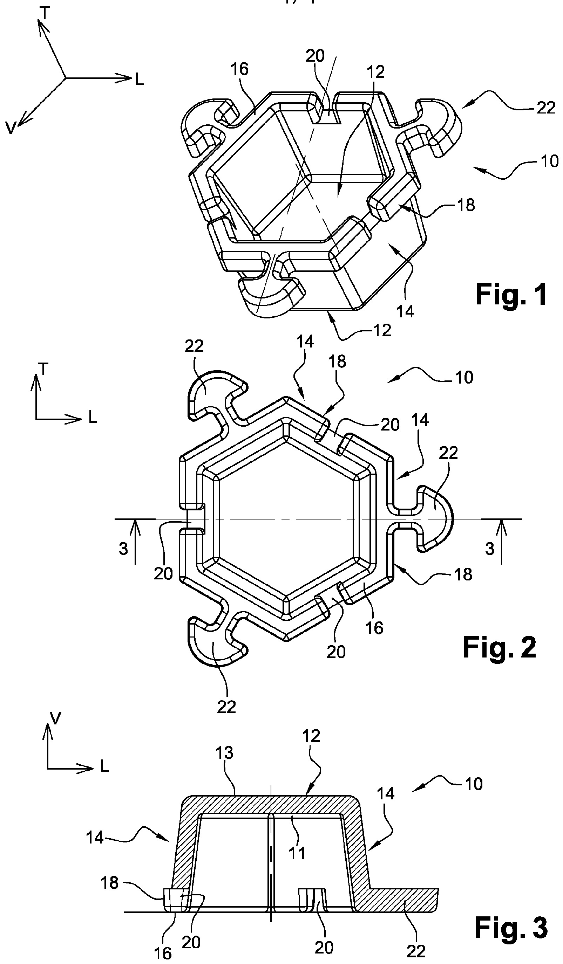

On a représenté à la figure 1, un bloc individuel 10 qui est un élément en forme de tronc de pyramide polyédrique dont la base est ici un hexagone régulier.

Le bloc 10 est réalisé par moulage en une seule pièce en une matière thermoplastique.

Le bloc 10 est délimité verticalement vers le haut par une paroi supérieure horizontale 12, dite d'impact, de contour hexagonal dont la face ou surface supérieure externe 13 constitue une partie de la surface supérieure horizontale d'impact d'un panneau réalisé par assemblage de blocs individuels 10.

Le bloc 10 comporte ici six parois latérales 14 d'orientation globalement verticale qui sont contiguës et continues reliées entre elles et à la paroi supérieure 12.

Le bloc 10 se présente ainsi sous la forme d'un élément globalement creux qui est délimité verticalement vers le bas par les bords inférieurs horizontaux 16 des parois latérales 14.

Au voisinage de son extrémité inférieure, chaque paroi verticale 14 se prolonge horizontalement et radialement vers l'extérieur par une lèvre 18. La lèvre périphérique 18 comporte ainsi six tronçons consécutifs dont chacun correspond à une paroi latérale verticale 14, les six tronçons consécutifs associés aux parois latérales 14 formant une lèvre périphérique continue qui entoure le bloc 10 à sa base.

Alternativement, chaque tronçon de la lèvre inférieure 16 comporte soit une mortaise 20, soit un tenon 22.

Les tenons 22 et mortaises 20 sont complémentaires de manière à permettre l'assemblage, comme cela sera expliqué par la suite, d'un panneau par emboîtement des tenons 22 et des mortaises 20 de plusieurs blocs adjacents 10.

Au sens de l'invention, on entend par tenon un connecteur mâle, ou élément mâle de connexion, qui est ici un élément mâle de connexion ou d'assemblage en forme générale de T, tandis que l'on entend par mortaise un connecteur femelle, ou un élément femelle de connexion, qui est ici une fente de connexion ou d'assemblage femelle qui s'étend radialement à travers toute l'épaisseur radiale de la lèvre 18, pour recevoir et verrouiller un élément mâle de connexion ou tenon 22.

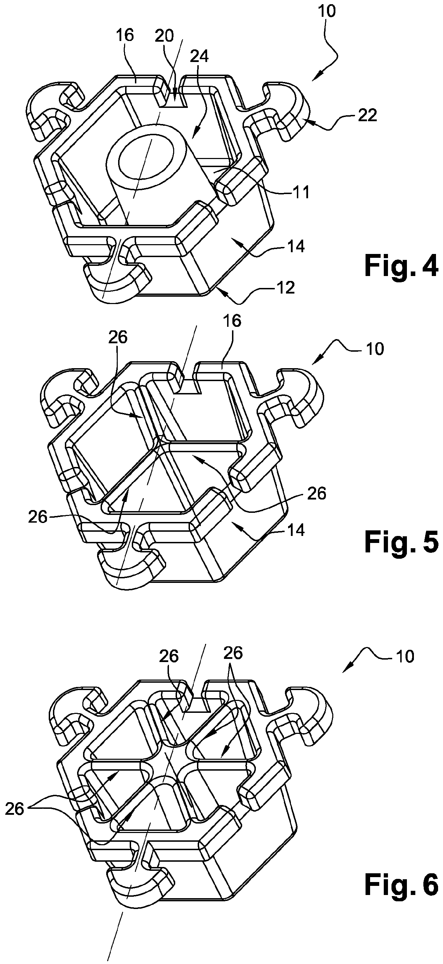

Dans la première variante de réalisation représentée à la figure 4, le bloc individuel 10 comporte un pieds central 24 interne qui est ici en forme générale de tube creux et qui s'étend verticalement sur toute la hauteur du bloc 10, à partir de la face interne 11 de la paroi supérieure horizontale 12 jusqu'au plan de la face inférieure 16 du bloc 10.

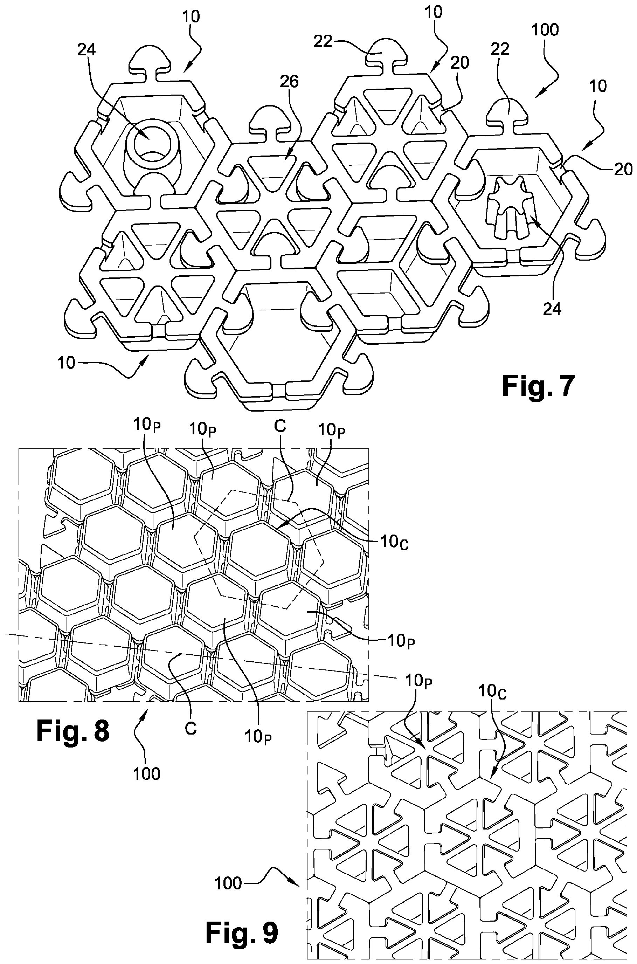

Le pieds vertical 24 peut revêtir toute forme ou section, et il peut aussi être plein comme cela est illustré à la partie droite de la figure 7.

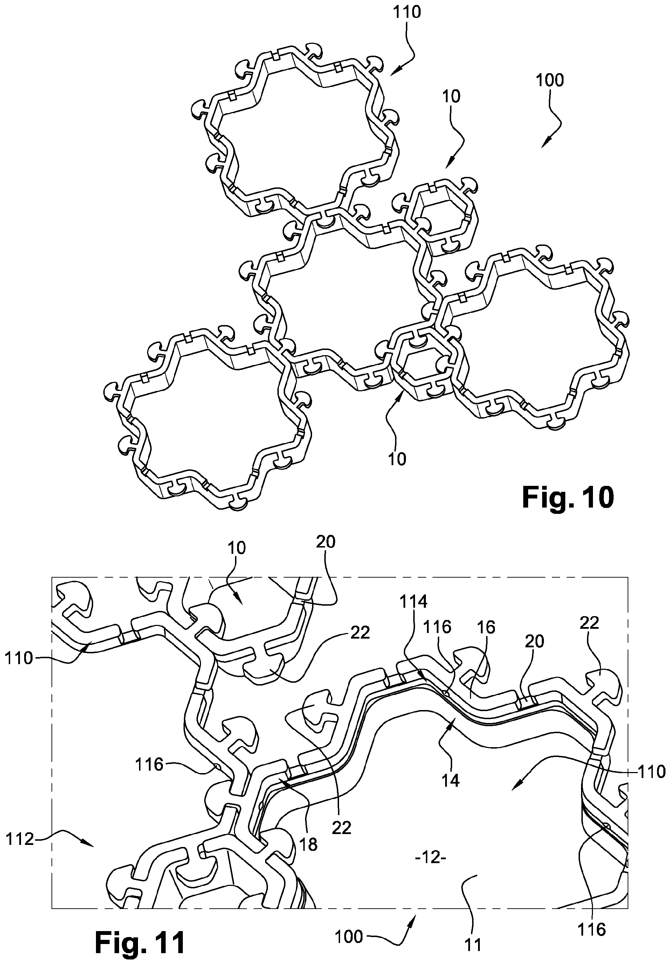

Il est aussi possible de prévoir plusieurs pieds verticaux au sein d'un même bloc individuel 10, ou à l'intérieur d'un même sous-ensemble tel qu'illustré à la figure 10.

Dans la variante représentée à la figure 5, le bloc individuel 10 comporte ici une série de trois cloisons internes 26 qui sont agencées centralement en étoile.

Chaque cloison interne 26 s'étend verticalement sur toute la hauteur du bloc 10 et radialement depuis le centre jusqu'à la périphérie et ici jusqu'à l'un des angles ou sommets délimités par deux parois latérales verticales 14 consécutives.

Dans la variante de réalisation illustrée à la figure 6, le bloc individuel comporte ici des cloisons internes 26 qui sont au nombre de six agencées radialement en étoile et reliant les six angles ou sommets du bloc individuel 10.

Des parois 26 peuvent aussi être prévues à l'intérieur d'un sous-ensemble tel qu'illustré à la figure 10

Comme on peut le voir à la figure 7, il est possible de réaliser un panneau 100 par assemblage de plusieurs blocs individuels unitaires 10 dont chacun constitue un élément modulaire du panneau.

L'assemblage s'effectue, après sélection du nombre de blocs à assembler et du choix de leur positionnement géométrique, par emboîtement des tenons 22 dans les mortaises 20.

Le dimensionnement des tenons et mortaises peut être tel que l'emboîtement s'effectue sous forme d'un emboîtement élastique de telle manière que, une fois assemblés, les blocs soient d'ores et déjà liés entre eux pour permettre une manipulation d'un panneau modulaire assemblé 100.

Comme cela sera expliqué par la suite, l'assemblage est complété par des piqûres

Du fait de la structure modulaire par assemblage de blocs individuels 10 voisins ou adjacents, il existe toujours un jeu entre deux faces latérales adjacentes des tronçons de lèvres de deux blocs adjacents en permettant ainsi une circulation d'air.

La conception selon l'invention permet une grande souplesse "d'articulation" entre les différents blocs 10, et donc une très grande adaptabilité à la conformation de la surface en regard de laquelle doit être agencé un panneau 100, par exemple pour la protection d'une partie du corps humain.

Comme on peut le voir en se reportant aux figures 8 et 9, on constate qu'un bloc individuel "central" 10c est entouré d'un sous ensemble de six blocs périphériques 10p qui forment une couronne ou rosace autour du bloc central 10c.

Le sous-ensemble ainsi constitué par la couronne de six blocs individuels périphériques 10c, peut être assemblé à d'autres sous-ensembles adjacents ou voisins, les seuls espaces restant alors entre deux couronnes adjacentes étant éventuellement comblés individuellement par un bloc individuel supplémentaire 10.

Pour réaliser un sous ensemble, avec ou sans son bloc central 10c, après assemblage par emboîtement, il est possible, de lier ensemble les six blocs périphériques 10c, par exemple en les piquant entre eux au moyen d'une piqûre "C", ou de les réaliser en une seule pièce comme cela sera expliqué plus avant.

Une piqûre C fait fonction de couture et elle peut être réalisée à la main ou l'aide d'une machine à coudre, de manière à constituer une liaison articulée entre des blocs &à, 10c, 10d et/ou des sous-ensembles adjacents ou voisins pour constituer un panneau modulaire 100.

La piqûre C est de préférence réalisée sur la face supérieure externe 13 des parois horizontales supérieures 12.

Chaque piqûre peut revêtir n'importe quelle forme ou contour en fonction des assemblages et panneaux à réaliser.

On a représenté à la figure 10, une variante de réalisation dans laquelle un sous-ensemble 110 constitué précédemment de six blocs individuels 10p agencés en couronne et d'un bloc central complémentaire 10c, est réalisé ici en une seule pièce par moulage en matériau thermoplastique.

On dispose ainsi d'un élément modulaire en forme de couronne ou rosace dont la paroi périphérique est constituée par dix-huit parois verticales consécutives et contiguës dont chacune comporte, dans son tronçon de lèvre inférieur, alternativement un tenon ou une mortaise 20.

Un panneau 100 est ainsi réalisé par l'assemblage de blocs individuels 10 et/ou de sous-ensemble 110 en fonction du panneau à réaliser, ces composants étant bien entendu solidarisés de manière complémentaire par des piqûres ou coutures non représentées.

Comme on peut le voir à la figure 11, un sous-ensemble modulaire 110 peut être fermé, à sa partie inférieure, par un couvercle inférieur 112 réalisé en tout matériau adapté, plus ou moins rigide, qui est fixé par emboîtement dans une rainure 114 formée à cet effet à l'intérieur des parois latérales verticales 14 en dessous de la lèvre périphérique 18 avec des ergots 116 pour le blocage en position du couvercle 112.

Le couvercle 112 peut comporter un ou plusieurs orifices pour le passage de l'air.

Le couvercle 112 peut aussi être un élément plein et fixé de plus, par exemple par collage, de manière étanche pour enfermer à l'intérieur du sous-ensemble 110, ou de la même manière à l'intérieur d'un bloc individuel 10 comportant un tel couvercle, un fluide tel que de l'air ou tout autre fluide gazeux ou liquide présentant par exemple des capacités ou facultés particulières améliorant ou modifiant l'absorption du panneau modulaire.

Dans le cas d'une production industrielle, si l'on désire "remplir" les blocs 10 et sous-ensembles 110 avec un liquide, les moyens étanches de fermeture peuvent être constitués, non pas par un ou plusieurs couvercles 112 rapportés, mais par une couche de matériau durcissable coulée au-dessus du volume de liquide préalablement versé à l'intérieur de ces composants.

Chacun des composants, blocs ou sous-ensembles, est réalisé de préférence par moulage dans une matière thermoplastique choisi parmi le groupe comportant le polyamide, le polyéthylène, etc.

## Revendications

1. Panneau modulaire (100) souple d'absorption des chocs et/ou des vibrations qui est délimité par une surface supérieure horizontale d'impact et une surface inférieure opposée parallèle et qui est réalisé par l'assemblage d'une pluralité de blocs individuels (10) adjacents d'absorption, panneau (100) dans lequel :
- chaque bloc individuel (10) est en forme de tronc de pyramide polyédrique, au moins partiellement creux, dont la base est un polygone régulier à n côtés ;
- chaque bloc individuel est délimité par :
-- une paroi supérieure horizontale (12) d'impact ;
-- n parois latérales verticales (14) contiguës reliées entre elles et reliées à ladite paroi supérieure (16) ;
le panneau modulaire est caractérisé du fait que:
- les n parois latérales contiguës (14) sont entourées par une lèvre inférieure périphérique (18) qui s'étend horizontalement et radialement vers l'extérieur ;
- chaque tronçon de la lèvre inférieure qui s'étend le long d'une paroi latérale (14) est muni d'un tenon (22) ou d'une mortaise (20) complémentaires agencés de manière à permettre l'assemblage de deux blocs individuels (10) adjacents, notamment par emboîtement selon la direction verticale d'un tenon (22) et d'une mortaise (20) appartenant respectivement à l'un et à l'autre desdits deux blocs individuels adjacents (10).

2. Panneau selon la revendication 1, **caractérisé en ce que** ledit polygone est un hexagone régulier, et **en ce que** chacun des six tronçons consécutifs de la lèvre inférieure (18) est muni, alternativement, d'un tenon (22) ou d'une mortaise (20) complémentaires.

3. Panneau selon la revendication 2, **caractérisé en ce qu'**il comporte au moins un sous-ensemble (110) composé de six blocs individuels identiques (10p) qui sont agencés en une couronne circulaire régulière délimitée par dix huit parois latérales (14) consécutives appartenant aux blocs individuels (10), ces parois latérales étant entourées par une lèvre inférieure périphérique (18) qui s'étend horizontalement vers l'extérieur, chacun des dix huit tronçons de la lèvre inférieure périphérique qui s'étend le long d'une paroi latérale étant muni d'un tenon (22) ou d'une mortaise (20) complémentaires agencés de manière à permettre l'assemblage du sous-ensemble avec un bloc individuel adjacent (10) et/ou avec un sous ensemble (110) adjacent.

4. Panneau selon la revendication 3, **caractérisé en ce que** ledit sous-ensemble (110) comporte un septième bloc individuel identique (10c) agencé au centre du sous-ensemble.

5. Panneau selon la revendications 4, **caractérisé en ce que** les blocs individuels (10c, 10p) du sous-ensemble (110) sont réalisés en une seule pièce, et **en ce que** ledit sous-ensemble est délimité par dix-huit parois latérales verticales contiguës reliées entre elles et reliées à une paroi supérieure commune, ces dix-huit parois latérales contiguës étant entourées par une lèvre inférieure périphérique continue qui s'étend horizontalement vers l'extérieur.

6. Panneau selon l'une quelconque des revendications précédentes, **caractérisé en ce qu'**au moins certains desdits blocs individuels (10) et/ou sous-ensembles sont reliés entre eux par une piqûre (C) servant de couture, réalisée à la main ou à l'aide d'une machine à coudre.

7. Panneau selon l'une quelconque des revendications précédentes, **caractérisé en ce que** chaque bloc individuel (10) et/ou chaque sous-ensemble est réalisé par moulage par injection d'une matière thermoplastique.

8. Panneau selon la revendication 7, **caractérisé en ce que** la face inférieure ouverte d'au moins un bloc individuel (10) et/ou d'au moins un sous-ensemble est fermée par un couvercle rapporté.

9. Panneau selon la revendication 7, **caractérisé en ce que** ladite matière thermoplastique est choisie parmi le groupe comportant le polyamide et le polyéthylène.

10. Panneau selon l'une quelconque des revendications précédentes, **caractérisé en ce que** chaque bloc individuel (10) et/ou chaque sous-ensemble comporte au moins une cloison interne (26) qui s'étend verticalement, depuis la face interne (11) de la paroi supérieure (12), sur toute sa hauteur.

11. Panneau selon l'une quelconque des revendications précédentes, **caractérisé en ce que** chaque bloc individuel (10) et/ou chaque sous-ensemble comporte plusieurs cloisons internes (26) agencées en étoile dont chacune s'étend verticalement, depuis la face interne (11) de la paroi supérieure (12), sur toute sa hauteur.

12. Panneau selon l'une quelconque des revendications précédentes, **caractérisé en ce que** chaque bloc individuel (10) et/ou chaque sous-ensemble comporte au moins un pied (24) qui s'étend verticalement, depuis la face interne de la paroi supérieure, sur toute sa hauteur.

13. Bloc (10) pour la fabrication d'un panneau modulaire souple d'absorption des chocs et/ou des vibrations qui est constitué par l'assemblage d'une pluralité de blocs individuels adjacents d'absorption, **caractérisé en ce que** :
- le bloc individuel est en forme de tronc de pyramide polyédrique, au moins partiellement creux, dont la base est un polygone régulier à n côtés ;
- le bloc individuel est délimité par :
-- une paroi supérieure horizontale (12) d'impact ;
-- n parois latérales verticales (14) contiguës reliées entre elles et reliées à ladite paroi supérieure ;
- les n parois latérales contiguës sont entourées par une lèvre inférieure périphérique (18) qui s'étend horizontalement et radialement vers l'extérieur ;
- chaque tronçon de la lèvre inférieure qui s'étend le long d'une paroi latérale est muni d'un tenon (22) ou d'une mortaise (20) complémentaires agencés de manière à permettre l'assemblage de deux blocs individuels adjacents, notamment par emboîtement selon la direction verticale d'un tenon et d'une mortaise appartenant respectivement à l'un et à l'autre desdits deux blocs individuels adjacents (10).

## Patentansprüche

1. Nachgiebige modulare Platte (100) zur Absorption von Stößen und/oder Vibrationen, die durch eine obere horizontale Stoßoberfläche und eine gegenüberliegende, parallele untere Oberfläche begrenzt ist und durch Zusammenfügen mehrerer benachbarter einzelner Absorptionsblöcke (10) verwirklicht ist, wobei in der Platte (100) :
- jeder einzelne Block (10) die Form eines polyedrischen Pyramidenstumpfs hat, der wenigstens teilweise hohl ist und dessen Basis ein regelmäßiges Polygon mit n Seiten ist;
- jeder einzelne Block begrenzt ist durch:
-- eine horizontale obere Stoßwand (12);
-- n vertikale seitliche Wände (14), die aneinandergrenzen und miteinander verbunden sind und mit der oberen Wand (16) verbunden sind;
wobei die modulare Platte **dadurch gekennzeichnet ist, dass**:
- die n aneinandergrenzenden seitlichen Wände (14) von einer unteren Umfangslippe (18) umgeben sind, die sich horizontal und radial nach außen erstreckt;
- jedes Teilstück der unteren Lippe, das sich längs einer seitlichen Wand (14) erstreckt, mit einem Zapfen (22) oder einem Zapfenloch (20) versehen ist, die zueinander komplementär sind und in der Weise angeordnet sind, dass sie die Zusammenfügung zweier benachbarter einzelner Blöcke (10) insbesondere durch Ineinanderfügen längs der vertikalen Richtung eines Zapfens (22) und eines Zapfenlochs (20), die zu dem einen bzw. dem anderen der zwei benachbarten einzelnen Blöcke (10) gehören, ermöglichen.

2. Platte nach Anspruch 1, **dadurch gekennzeichnet, dass** das Polygon ein regelmäßiges Hexagon ist und dass jedes der sechs aufeinanderfolgenden Teilstücke der unteren Lippe (18) abwechselnd mit einem Zapfen (22) oder einem Zapfenloch (20), die zueinander komplementär sind, versehen ist.

3. Platte nach Anspruch 2, **dadurch gekennzeichnet, dass** sie wenigstens eine Unteranordnung (110) umfasst, die aus sechs völlig gleichen einzelnen Blöcken (10p) aufgebaut ist, die in einem regelmäßigen kreisförmigen Kranz angeordnet sind, der durch achtzehn aufeinanderfolgende seitliche Wände (14) begrenzt ist, die zu den einzelnen Blöcken (10) gehören, wobei diese seitlichen Wände (14) von einer unteren Umfangslippe (18) umgeben sind, die sich horizontal nach außen erstreckt, wobei jedes der achtzehn Teilstücke der unteren Umfangslippe, das sich längs einer seitlichen Wand erstreckt, mit einem Zapfen (22) oder einem Zapfenloch (20) versehen ist, die zueinander komplementär sind und in der Weise angeordnet sind, dass die Zusammenfügung der Unteranordnung mit einem benachbarten einzelnen Block (10) und/oder mit einer benachbarten Unteranordnung (110) ermöglichen.

4. Platte nach Anspruch 3, **dadurch gekennzeichnet, dass** die Unteranordnung (110) einen siebten völlig gleichen einzelnen Block (10c) umfasst, der in der Mitte der Unteranordnung angeordnet ist.

5. Platte nach Anspruch 4, **dadurch gekennzeichnet, dass** die einzelnen Blöcke (10c, 10p) der Unteranordnung (110) einteilig ausgebildet sind und dass die Unteranordnung durch achtzehn aneinandergrenzende vertikale seitliche Wände begrenzt ist, die miteinander und mit einer gemeinsamen oberen Wand verbunden sind, wobei diese achtzehn aneinandergrenzenden seitlichen Wände von einer ununterbrochenen unteren Umfangslippe umgeben sind, die sich horizontal nach außen erstreckt.

6. Platte nach einem der vorhergehenden Ansprüche, **dadurch gekennzeichnet, dass** wenigstens bestimmte der einzelnen Blöcke (10) und/oder von Unteranordnungen miteinander durch einen als Naht dienenden Stich (C), der manuell oder mit Hilfe einer Nähmaschine verwirklicht ist, verbunden sind.

7. Platte nach einem der vorhergehenden Ansprüche, **dadurch gekennzeichnet, dass** jeder einzelne Block und/oder jede Unteranordnung durch Spritzguss eines thermoplastischen Materials verwirklicht ist.

8. Platte nach Anspruch 7, **dadurch gekennzeichnet, dass** die offene untere Fläche wenigstens eines einzelnen Blocks (10) und/oder wenigstens einer Unteranordnung durch einen angefügten Deckel verschlossen ist.

9. Platte nach Anspruch 7, **dadurch gekennzeichnet, dass** das thermoplastische Material aus der Gruppe gewählt ist, die Polyamid und Polyethylen enthält.

10. Platte nach einem der vorhergehenden Ansprüche, **dadurch gekennzeichnet, dass** jeder einzelne Block (10) und/oder jede Unteranordnung wenigstens eine innere Trennwand (26) aufweist, die sich von der inneren Fläche (11) der oberen Wand (12) vertikal über ihre gesamte Höhe erstreckt.

11. Platte nach einem der vorhergehenden Ansprüche, **dadurch gekennzeichnet, dass** jeder einzelne Block (10) und/oder jede Unteranordnung mehrere innere Trennwände (26) umfasst, die sternförmig angeordnet sind, wovon sich jede von der inneren Fläche (11) der oberen Wand (12) vertikal über ihre gesamte Höhe erstreckt.

12. Platte nach einem der vorhergehenden Ansprüche, **dadurch gekennzeichnet, dass** jeder einzelne Block (10) und/oder jede Unteranordnung wenigstens einen Fuß (24) aufweist, der sich von der inneren Fläche der oberen Wand vertikal über ihre gesamte Höhe erstreckt.

13. Block (10) für die Herstellung einer nachgiebigen modularen Platte zur Absorption von Stößen und/oder Vibrationen, der durch Zusammenfügen mehrerer einzelner benachbarter Absorptionsblöcke gebildet ist, **dadurch gekennzeichnet, dass**:
- der einzelne Block die Form eines polyedrischen Pyramidenstumpfs hat, der wenigstens teilweise hohl ist und dessen Basis ein regelmäßiges Polygon mit n Seiten ist;
- der einzelne Block begrenzt ist durch:
-- eine horizontale obere Stoßwand (12);
-- n aneinandergrenzende vertikale seitliche Wände (14), die miteinander verbunden sind und mit der oberen Wand verbunden sind;
- die n aneinandergrenzenden seitlichen Wände von einer unteren Umfangslippe (18) umgeben sind, die sich horizontal und radial nach außen erstreckt;
- jedes Teilstück der unteren Lippe, das sich längs einer seitlichen Wand erstreckt, mit einem Zapfen (22) oder einem Zapfenloch (20) versehen ist, die zueinander komplementär sind und in der Weise angeordnet sind, dass sie die Zusammenfügung von zwei benachbarten einzelnen Blöcken insbesondere durch Ineinanderfügen längs der vertikalen Richtung eines Zapfens und eines Zapfenlochs, die zu dem einen bzw. dem anderen der zwei benachbarten einzelnen Blöcke (10) gehören, ermöglichen.

## Claims

1. Flexible modular panel (100) for absorbing shocks and/or vibrations, which is delimited by a horizontal upper impact surface and a lower parallel opposing surface, and which is produced by assembling a plurality of adjacent individual absorption blocks (10), a panel (100) wherein:
- each individual block (10) is in the shape of a polyhedral truncated pyramid, hollow at least in part, the base of which is a regular polygon having n sides;
- each individual block is delimited by:
-- a horizontal upper impact wall (12);
-- n contiguous vertical lateral walls (14) which are interconnected and connected to said upper wall (16);
the modular panel is **characterized by** :
- the n contiguous lateral walls (14) are surrounded by a lower peripheral lip (18) which extends horizontally and radially towards the outside;
- each portion of the lower lip extending along a lateral wall (14) is provided with a tenon (22) or a mortise (20) which are complementary to one another and are arranged so as to allow the assembly of two adjacent individual blocks (10), in particular by means of interlocking, in the vertical direction, of a tenon (22) and a mortise (20) belonging to one and to the other respectively of said two adjacent individual blocks (10).

2. Panel according to claim 1, **characterised in that** said polygon is a regular hexagon and **in that** each of the six consecutive portions of the lower lip (18) is provided, alternately, with a tenon (22) or a mortise (20) which are complementary to one another.

3. Panel according to claim 2, **characterised in that** it comprises at least one sub-assembly (110) formed of six identical individual blocks (10p) which are arranged in a regular circular crown shape delimited by eighteen consecutive lateral walls (14) belonging to individual blocks (10), said lateral walls being surrounded by a lower peripheral lip (18) which extends horizontally towards the outside, each of said eighteen portions of the lower peripheral lip which extends along a lateral wall being provided with a tenon (22) or a mortise (20) which are complementary to one another and are arranged so as to allow the sub-assembly to be assembled to an adjacent individual block (10) and/or to an adjacent sub-assembly (110).

4. Panel according to claim 3, **characterised in that** said sub-assembly (110) comprises a seventh identical individual block (10c) arranged in the centre of the sub-assembly.

5. Panel according to claim 4, **characterised in that** the individual blocks (10c, 10p) of the sub-assembly (110) are formed in one piece, and **in that** said sub-assembly is delimited by eighteen contiguous vertical lateral walls which are interconnected and connected to a common upper wall, said eighteen contiguous lateral walls being surrounded by a continuous lower peripheral lip which extends horizontally towards the outside.

6. Panel according to any of the preceding claims, **characterised in that** at least some of said individual blocks (10) and/or sub-assemblies are interconnected by a stitch (C), acting as a seam, made by hand or by means of a sewing machine.

7. Panel according to any of the preceding claims, **characterised in that** each individual block (10) and/or each sub-assembly is formed by injection moulding of a thermoplastic material.

8. Panel according to claim 7, **characterised in that** the open lower face of at least one individual block (10) and/or at least one sub-assembly is closed by a sewn-on cover.

9. Panel according to claim 7, **characterised in that** said thermoplastic material is selected from the group comprising polyamide and polyethylene.

10. Panel according to any of the preceding claims, **characterised in that** each individual block (10) and/or each sub-assembly comprises at least one internal partition (26) which extends vertically, from the internal face (11) of the upper wall (12), over the entire height thereof.

11. Panel according to any of the preceding claims, **characterised in that** each individual block (10) and/or each sub-assembly comprises a plurality of internal partitions (26) arranged in a star shape, each of which partitions extends vertically, from the internal face (11) of the upper wall (12), over the entire height thereof.

12. Panel according to any of the preceding claims, **characterised in that** each individual block (10) and/or each sub-assembly comprises at least one foot (24) which extends vertically, from the internal face of the upper wall, over the entire height thereof.

13. Block (10) for manufacturing a flexible modular panel for absorbing shocks and/or vibrations, which is produced by assembling a plurality of adjacent individual absorption blocks, **characterised in that**:
- the individual block is in the shape of a polyhedral truncated pyramid, hollow at least in part, the base of which is a regular polygon having n sides;
- the individual block is delimited by:
-- a horizontal upper impact wall (12);
-- n contiguous vertical lateral walls (14) which are interconnected and connected to said upper wall;
- the n contiguous lateral walls are surrounded by a lower peripheral lip (18) which extends horizontally and radially towards the outside;
- each portion of the lower lip extending along a lateral wall is provided with a tenon (22) or a mortise (20) which are complementary to one another and are arranged so as to allow the assembly of two adjacent individual blocks, in particular by means of interlocking, in the vertical direction, of a tenon and a mortise belonging to one and to the other respectively of said two adjacent individual blocks (10).
